(19) **Europäisches Patentamt / European Patent Office / Office européen des brevets**

(11) **EP 1 742 048 A1**

(12) # EUROPEAN PATENT APPLICATION

(43) Date of publication:
**10.01.2007 Bulletin 2007/02**

(51) Int Cl.:
**G01N 29/11** (2006.01)   **G01N 29/22** (2006.01)

(21) Application number: **05012319.9**

(22) Date of filing: **08.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Rieter Technologies AG**
**8406 Winterthur (CH)**

(72) Inventors:
• **Courtois, Theophane**
  **8406 Winterthur (CH)**

• **Bertolini, Claudio**
  **8408 Winterthur (CH)**
• **Lütolf, Jürg**
  **8406 Winterthur (CH)**

(74) Representative: **Alder, Hans Rudi**
**Seifert & Partner**
**Pestalozzistrasse 2**
**Postfach 1416**
**8201 Schaffhausen (CH)**

(54) **Acoustic device for determining parameters of a porous material**

(57)    A device that allows the evaluation of the acoustical Biot-Allard material parameters in a fast and efficient way by using an inverse hybrid calculating tool. The calculating tool is called "inverse", since the material parameters are calculated backwards, i.e. by starting from standard transfer functions measured between microphone positions placed above and below a sample of the material inserted into a cylindrical tube and by using theoretical formulas based on material models. It is at the same time called "hybrid", since not all the parameters are actually calculated backwards but instead a limited number of them (the porosity and possibly the air flow resistivity) is measured with classical direct methods and in advance. The principle of the invention is based on the measurement of transfer functions instead of impedances, it is able to minimize the number of measurements necessary for the evaluation of the material parameters of interest and it exploits also a more robust experimental setup.

Figure 6

Measurement of the transfer funtions $H_{21}$, $H_{31}$ and $H_{41}$

Computing the equivalent fluid characteristics $Z_c$ and $k_c$

Getting the dynamic density $\tilde{\rho}(\omega)$ and bulk modulus $\tilde{K}(\omega)$

Curve fittings on $\tilde{\rho}(\omega) \Rightarrow \tau, \sigma, \Lambda$
Curve fitting on $\tilde{K}(\omega) \Rightarrow \Lambda'$

Comparison of parameters with other measurements (ENTPE)

Impedance tube validation

**Description**

The present invention is concerned with a device for determining Biot-Allard parameters according to the preamble of claim1.

Today's car manufactures ask more and more for a complete characterisation of porous materials, which are generally used within the vehicles, in particular for linings. Up to now it is very time and cost consuming to measure all the parameters, since the common technology needs one apparatus and measurement to determine one single acoustic parameter. Therefore many parameters are estimated only. A device for the acoustic measurement of physical parameters of porous elastic materials is described in WO2004/088758. Further useful devices are:

- Impedance tube (requires several measurements);
- Transmission loss tube (which requires a specific acquisition procedure, i.e. a procedure for transfer functions measurements).

Such devices are well known in the art. Their measurements are based on a two-microphone transfer-function method according to ISO 10534-2 and ASTM E1050-98 international standards. Theses tubes allow the measurement of parameters characterising acoustic materials, in particular parameters such as the sound absorption coefficient, the reflection coefficient, the acoustic impedance and admittance, and the transmission loss coefficient.

The traditional devices allow direct measurements of the Biot's parameters. These measurements need one apparatus and one sample per parameter to be measured. An example for the method used for determining intrinsic parameters of porous materials is described in the paper of X. Olny et. al. :"An indirect acoustic method for determining intrinsic parameters of porous materials", which has been presented during the 2nd Biot Conference on Poromechanics in Grenoble, France on august 26 - 28, 2002.

In the last years, the use of the Biot-Allard model for the simulation of the behaviour of porous materials is becoming more and more a substantial part of the vehicle NVH virtual development process. The main application of this model still consists in the evaluation of the macroscopic acoustic performances of sound insulating and sound absorbing multi-layers through software tools that assume the multilayer to be flat and infinite in size and that use a transfer-matrix technique to infer the global acoustical and dynamical behaviour of the multilayer from that of the single layers. The results of such calculations (typically expressed in terms of Transmission Loss or Absorption Coefficient curves) can be used to quickly compare the performances of different sound package parts and are also widely used in vehicle airborne noise models. More recently, the same Biot-Allard model has also been applied within FE codes for the simulation of the dynamical and acoustical behaviour of real finite-size sound package parts in the medium-low frequency range.

As it is well known, the simulation of the physical behaviour of porous materials by means of the Biot-Allard model requires the knowledge of a list of material parameters. These parameters are essentially needed both for the characterization of the material structural frame and of the fluid that saturates it and also for the characterization of the inertial and dynamic coupling between them. Since the results of the simulations based on the Biot-Allard model can be rather sensitive to variations in one or more of these parameters, it is important to be able to evaluate them in a careful and robust way. Along the years, different experimental techniques have been proposed and implemented for the measurement of these parameters. All these classical techniques address the measurement of one single parameter and try to deduce the value of the parameter on the basis of the way a sample of the material "reacts" when it is subjected to a certain kind of "generalized excitation" (e.g. a controlled air flow through the sample or a controlled change of the pressure of the fluid that saturates it). These measurement techniques are generally called "direct" because the material parameter of interest is evaluated "directly" starting from the experimental data on the basis of some known physical phenomenon or physical law (e.g. Darcy's law or Boyle's law) and, as a consequence of this, they do not rely on any material model.

Up to now the characterisation of porous materials was addressing only the most relevant parameters for the prediction of the acoustical macroscopic performances of multilayers, that is to say porosity and airflow resistivity. The other acoustical parameters were estimated, on the basis of some experience (e.g. the tortuosity for standard soft felts was always taken equal to 1) and one the basis of theoretical formulas based on the assumption of cylindrical pores with circular cross section (this assumption is implicit when using the Bolton model for porous materials in SISAB). As explained in the introduction, this way of proceeding was essentially dictated by an efficiency issue: in a development project it is generally necessary to evaluate several different sound package configurations, possibly including new materials with density (or thickness) dependent parameters and the time schedule of the project is often not compatible with a full characterization of the materials using classical direct techniques. On the other hand, it is clear that by estimating some of the acoustical parameters, uncertainties will be introduced into the final results of the simulations, and in some cases, these uncertainties are not completely negligible.

Measuring most of the Biot's parameters. in particular composite porosity ($\phi$), airflow resistivity ($\sigma$), tortuosity

($\tau$), pore shape factor (c), viscous characteristic length (L or $\Lambda$), and the thermal characteristic length (L' or $\Lambda$') require each a measurement with an apparatus involving a sample.

It is therefore the aim of the present invention to reduce the number of experiments to one single experiment for determining all the relevant acoustic parameters of a porous material in a simple and reliable way.

Inverse and hybrid methods for the determination of Biot-Allard acoustical parameters are herewith introduced as solution to the above mentioned problem. The solution proposed by this invention is capable to provide the full set of acoustical Biot-Allard parameters without increasing the experimental effort that so far was needed for the measurement of porosity and airflow resistivity. The Biot parameters are used to predict the acoustic properties of the porous material. This invention solves the above problem by measuring the acoustic response of the porous material with one single apparatus in order to identify the Biot parameters. Furthermore the above problem is solved by a single measurement. The acoustic response of the porous material provides enough information and it is possible to get enough information, if the acoustic transfer functions at both sides of the porous sample are measured.

Present invention consists in an adaption of the impedance tube (standard) and commonly impedance-transmission loss tubes (well known in the art), whereby the method according to the invention requires only one measurement. This method allows additionally to measure the viscous length, the thermal length and the tortuosity as further parameters in addition to the porosity and airflow resistivity.

In the following a briefly description of the Biot-Allard model parameters is given:

The porosity $\phi$ is the simplest parameter characterizing the internal geometry of a porous material. For a given sample of the material, it is basically defined as the ratio between the air volume $V_a$ included in the sample and its total volume $V_t$: $\phi = V_a/V_t$. If $\rho_s$ is the density of the material that constitutes the structural frame of the porous material and $\rho_a$ is the density of the fluid that saturates it, the bulk density $\rho$ of the porous material can be calculated with the formula:

$$\rho = (1 - \phi)\rho_s + \phi\rho_a$$

As one can see from this formula, the porosity could be in principle estimated, knowing the bulk density of the porous material and the density of the material that constitutes its structural frame. However, the accuracy of this estimation is most of the time very poor due to the high uncertainties of measuring the structural frame density.

The most well known (and non destructive) direct measurement method of the porosity is to mount a sample of the material in a cylinder with a known volume and the cylinder is then mounted in the measurement system. A valve closes the system when the measurement starts and the initial pressure in the system is the same as the atmospheric pressure. Using a piston, the measurement system creates a known volume change, which creates a pressure change in the fluid that saturates the porous material. By knowing the initial volume of the sample, measuring the applied volume change and the corresponding pressure change, the porosity can be calculated using Boyle's law, assuming that the whole process takes place at constant temperature (and neglecting the volume change of the porous material structural frame). The porosities of the materials used in the car industry range from 0.7 to 0.99. In most cases it is between 0.9 and 0.99.

When a flow of air passes through a porous material sample inserted into a tube, a pressure gradient appears between the two sides of the sample. Under the assumption of laminar flow (a condition that is not always easy to realize in practice and that requires the flow to be slow enough), the pressure drop $\Delta P$ between the two faces of the sample is proportional to the velocity flow per unit area $Q_v$ through the sample itself (Darcy's law):

$$\Delta P = \sigma \cdot Q_v \cdot t$$

where $t$ is the thickness of the material sample and $\sigma$ is a constant of proportionality that is characteristic of the porous material and that is called: "airflow resistivity". This parameter is generally measured by applying directly Darcy's law, by using either a static or an alternate (very low frequency) controlled airflow. In both cases, the airflow is generated and controlled through the sample by using a piston or a vacuum pump. By knowing the area and the thickness of the sample and by measuring the pressure drop through the sample, the airflow resistivity can be calculated directly applying the formula here above.

The airflow resistivity of the porous materials used in the car industry can take a wide range of values. These values can vary from 1000 for a light limp felt up to 500 000 for a compressed felt or a high-density foam. Some much higher values (~2e6) can also be found, for example in the case of the thin resistive screens used to increase the specific surface impedance of some acoustic treatments.

When a steady flow of air passes through a flat porous material sample, the complexity of the pores geometry forces the fluid particles to follow a path that is very far from being straight. The tortuosity is a (purely) geometrical parameter that accounts for this fact, giving a measure of the ratio between the average-length of the microscopic path followed by the fluid particles and the length of a straight path normal to the material sample. To be more specific, let us assume that an inviscid steady flow of air passes through a sample of the material and that the frame of the material itself is motionless. In this situation, let us indicate with $\vec{V}_m(P)$ the microscopic velocity field inside the fluid that saturates the pores at a generic point. The macroscopic velocity $\vec{V}(P_0)$ at a fixed point $P_0$ is given by the average of $\vec{V}_m(P)$ over a small volume $\Omega(P_0)$ around $P_0$:

$$\vec{V}(P_0) = \left\langle \vec{V}_m(P) \right\rangle_{\Omega(P_0)}$$

In this situation, the tortuosity $\tau$ is defined as

$$\tau = \frac{\left\langle V_m^2(P) \right\rangle_{\Omega(P_0)}}{V^2(P_0)}$$

In the formula here above, the dependency of $\tau$ on $P_0$ has been omitted, assuming the porous material to be homogeneous. Furthermore it is very important to notice that, having assumed the porous material frame to be motionless and the fluid flow to be inviscid, the tortuosity depends only on the geometry of the porous material frame. Since the microscopic path followed by the fluid particles inside the porous material will always be longer than a straight line, $\tau$ will always be higher than 1; it is usually close to 1 for typical felt materials and can lie between 1 and 2 for classical foams. Values up to 10 can happen in case of reticulated foams where the pores are partially or completely closed.

If the porous material frame does not conduct electricity, the measurement of the tortuosity can be done by taking a sample of the material, putting it between two electrodes and saturating it with a conducting fluid. If $r_c$ and $r_f$ are respectively the measured electric resistivity of the saturated material and of the saturating fluid, it can be shown that the tortuosity is given by:

$$\tau = \phi \frac{r_c}{r_f}$$

where $\phi$ is the porosity of the material. This technique, whose principle is rather simple, is not easily applicable to materials with relatively high tortuosity.

Nowadays, the most widely used direct method for the measurement of tortuosity is based on ultrasonic techniques that allow the evaluation of the porous material dispersion equation at very high frequencies. This dispersion equation gives access to some physical parameters that are directly related to tortuosity. These measurement techniques require, anyway, very specific equipments and can be rather difficult for some porous materials used in the car industry, like compressed felts.

To complete the set of Biot-Allard parameters it is necessary to introduce two further (purely) geometrical parameters, usually named "viscous and thermal characteristic lengths" and indicated with $\Lambda$ and $\Lambda$'. These lengths are linked to the two main energy dissipation mechanisms inside a porous material: the viscous friction and the thermal exchanges between the material frame and the fluid that saturates it. More specifically, $\Lambda$ is defined in according to the following formula:

$$\frac{2}{\Lambda} = \frac{\int_\Gamma V_m^2(P)\,d\Gamma}{\int_\Omega V_m^2(P)\,d\Omega}$$

where the integral in the numerator is over the area r of the walls of the frame-fluid interface and that of the denominator is over the pore volume $\Omega$. $\vec{V}_m(P)$ is the microscopic velocity field inside the porous materials. Thus $2/\Lambda$ is essentially the surface-to-volume ratio of the pores, in which each area or volume element is weighted according to the local value of the squared modulus of the microscopic velocity field. It can be shown that this quantity is directly related to the "viscous skin depth" of the porous material, i.e. the distance from the pore walls within which the microscopic velocity field is substantially perturbed by the viscous interaction with the material frame.

In an analogous way, $\Lambda$' is defined according to the formula:

$$\frac{2}{\Lambda'} = \frac{\int_\Gamma d\Gamma}{\int_\Omega d\Omega}$$

In other words, the ratio $2/\Lambda$' is simply the surface-to-volume ratio of the material pores, with no weighting. It can be shown that this quantity is directly related to the distance from the pore walls within which the microscopic temperature field in the fluid is substantially perturbed by the thermal exchanges with the material frame.

It can be shown that $\Lambda < \Lambda$' , and a ratio of 2 or 3 can often be assumed between the two lengths. The values of 10 to 100 microns for $\Lambda$ are representative of typical porous materials used in the car industry. These parameters are not really accessible at audible frequency range. Like for the tortuosity, they are deduced from the material dispersion equation evaluated by means of ultrasonic techniques.

For the description of the viscous friction and thermal exchanges between frame and fluid within a porous material, some models based on the Biot-Allard theory make use of formulas deduced under the assumption of cylindrical pores. In this case it is easy to see that:

$$\Lambda = \Lambda' = 2\frac{\Gamma}{\Pi}$$

where r is the pore cross sectional area and $\Pi$ is the pore cross sectional perimeter. If the pores cross-section is circular, then $\Lambda = \Lambda$' = $R$, where R is the radius of the pore. In this case, it is possible to demonstrate that the following relationship linking the various material parameters is valid:

$$\Lambda = \sqrt{\frac{8\eta\tau}{\sigma\phi}}$$

If the shape of the pore cross section is not circular, it is possible to show that the formula here above has to be generalized introducing a factor in front of the right hand side:

$$\Lambda = \frac{1}{c}\sqrt{\frac{8\eta\tau}{\sigma\phi}}$$

the factor *c* appearing in this latter formula is by definition the "pore shape factor" of the material. In other words, *c* is a kind of "correction factor" that allows to apply to cylindrical pores with general cross section the formulas deduced for the case of circular cross section. The pore shape factor is thus equal to 1 for cylindrical pores, less than 1 for slit-like pores, and greater than 1 (up to 2 or 3) for complex shape pores.

Present invention is to be seen in the introduction of the inverse approach as described in the following:

As already mentioned, using Biot-Allard's theory it is possible to derive the macroscopic acoustic performances of a porous material starting from its Biot-Allard microscopic parameters. The basic idea behind the inverse approach consists in reversing this procedure, i.e. to calculate at least some of the Biot-Allard microscopic parameters starting from some kind of macroscopic experimental data that can be relatively easily available, using the formulas of Biot-Allard's theory.

Under the hypotheses of the classical homogenization theory (i.e. the wavelength is large compared to the heterogeneities of the medium), a rigid-framed porous material can be represented as an "equivalent" dissipative homogeneous fluid characterized by an "equivalent" complex dynamic density $\bar{\rho}(\omega)$ and by an "equivalent" complex dynamic

bulk modulus $\tilde{K}(\omega)$. Under these same hypotheses, the propagation of acoustic waves within the porous material can then be formally described by means of the classical wave equation and of the classical Euler equation:

$$\Delta p + \omega^2 \frac{\tilde{\rho}}{\tilde{K}} p = 0$$

$$\nabla p = -i\tilde{\rho}\omega\vec{v}$$

$$(2.1)$$

The corresponding complex wave number $k_c$ and characteristic impedance $Z_c$ of the equivalent fluid are then given by equations (2.2):

$$k_c(\omega) = \omega\sqrt{\tilde{\rho}/\tilde{K}}$$

$$Z_c(\omega) = \sqrt{\tilde{\rho}\cdot\tilde{K}}$$

$$(2.2)$$

In the context of the Biot-Allard theory, unless the porous structure has a very simple microscopic geometry. The corresponding expressions of the dynamic density and bulk modulus are respectively given by (2.3) and (2.4):

$$\tilde{\rho}(\omega) = \frac{\tau\rho_0}{\phi}\left[1 + \frac{\sigma\phi}{i\omega\rho_0\tau}\sqrt{1 + \frac{4i\tau^2\eta\rho_0\omega}{\sigma^2\Lambda^2\phi^2}}\right]$$

$$(2.3)$$

$$\tilde{K}(\omega) = \frac{\gamma P_0/\phi}{\gamma - (\gamma-1)\left[1 + \frac{8\eta}{i\rho_0\omega B^2\Lambda'^2}\sqrt{1 + \frac{i\rho_0\omega B^2\Lambda'^2}{16\eta}}\right]^{-1}}$$

$$(2.4)$$

Where the static pressure of air $P_0$, the ratio of specific heats y , the Prandtl number $B^2$, the air density $\rho_0$ and the dynamic viscosity of air $\eta$ are determined by the environment conditions (temperature, pressure and air humidity). As one can see from formulas (2.3) and (2.4), the dynamic density depends on the inertial and viscous parameters, that is to say the tortuosity $\tau$, the airflow resistivity $\sigma$ and the characteristic viscous length $\Lambda$. On the other hand, the dynamic bulk modulus depends only on the characteristic thermal length $\Lambda'$. Both quantities depend on the porosity $\phi$. It is very important to remark here that formulas (2.3) and (2.4) are strictly valid only at sufficiently high frequencies, above the so-called "viscous frequency" of the material given by $\omega_v = \dfrac{\sigma\phi}{\rho_0\tau}$ .

Assuming that the equivalent density and bulk modulus can be somehow made available experimentally. Taking the real part and the imaginary part of the equation (2.3), two equations are obtained in function of 4 parameters ($\phi$, $\sigma$, $\tau$ and $\Lambda$). Taking the real part and the imaginary part of the equation (2.4), 2 equations are obtained in function of 2 parameters ($\phi$ and $\Lambda'$). Different mathematical procedures were investigated to solve equations (2.3) and (2.4) and the one that was at the end implemented will be described in what follows. But before coming to that, it is worth reminding again that the whole process relies on two important assumptions: the first one is that the frame of the porous material can be considered motionless (this is what makes the "equivalent fluid model" meaningful) and the second one is the validity of formulas (2.3) and (2.4). Both these requirements tend to make the procedure valid at sufficiently high frequencies, where the frame tends to remain motionless and the viscous interaction between frame and fluid inside the material becomes important. This point will be explained later on, when discussing practical examples. From a general point of view, it is worth noticing that the Biot-Allard parameters should be, of course, frequency independent, while the solution of equations (2.3) and (2.4) will generally give as an output frequency functions. The fact that these functions do not depend strongly on frequency is already a first check about the validity of these assumptions over the frequency range where the inversion process has been carried out.

Coming to the mathematical details of the inversion process as already mentioned, different strategies could be adopted to identify the Biot-Allard parameters. It was already proposed a validated approach based on the prior knowledge of $\phi$ and $\sigma$. In this situation, it is possible to provide closed analytical formulas for the other parameters as a function of the measured quantities. In our case, we decided to measure in advance only the porosity $\phi$ due to the low sensitivity of the equations (2.3) and (2.4) to $\phi$. In this situation, taking the real and imaginary parts of equations (2.3) and (2.4) the following problem is obtained:

- 2 real equations $\Re\left(\tilde{\rho}(\omega)\right)$ and $\Im\left(\tilde{\rho}(\omega)\right)$ as function of 3 real parameters $\tau$, $\sigma$ and $\Lambda$;

- 2 real equations $\Re\left(\tilde{K}(\omega)\right)$ and $\Im\left(\tilde{K}(\omega)\right)$ as function of 1 real parameter $\Lambda'$.

It is proposed to identify the 4 unknown parameters as constant values by applying a nonlinear curve fitting of the "measured" frequency-dependent $\tilde{\rho}_{meas}(\omega)$ and $\tilde{K}_{meas}(\omega)$ using formulas (2.3) and (2.4). The "viscous" and "thermal" problems are solved independently in the least-squares sense as follows, thanks to the Levenberg-Marquardt method:

- Curve-fitting of $\Re\left(\tilde{\rho}(\omega)\right)$ and $\Im\left(\tilde{\rho}(\omega)\right)$ performed with 3 unknown variables r, $\sigma$ and $\Lambda$; the algorithm finds the three coefficients that best fit the equation (2.3) on a given frequency range:

$$\min_{\{\tau,\sigma,\Lambda\}}\begin{cases}\dfrac{1}{2}\left\|\Re\left(\tilde{\rho}(\tau,\sigma,\Lambda)\right)-\Re\left(\tilde{\rho}_{meas}\right)\right\|_2^2=\dfrac{1}{2}\sum_i\left[\Re\left(\tilde{\rho}(\tau,\sigma,\Lambda,\omega_i)\right)-\Re\left(\tilde{\rho}_{meas}(\omega_i)\right)\right]^2\\[2mm]\dfrac{1}{2}\left\|\Im\left(\tilde{\rho}(\tau,\sigma,\Lambda)\right)-\Im\left(\tilde{\rho}_{meas}\right)\right\|_2^2=\dfrac{1}{2}\sum_i\left[\Im\left(\tilde{\rho}(\tau,\sigma,\Lambda,\omega_i)\right)-\Im\left(\tilde{\rho}_{meas}(\omega_i)\right)\right]^2\end{cases}\quad(2.5)$$

- Curve-fitting of $\Re\left(\tilde{K}(\omega)\right)$ and $\Im\left(\tilde{K}(\omega)\right)$ with 1 unknown variable $\Lambda'$; the algorithm finds the coefficient $\Lambda'$ that best fit the equation (2.4) on a given frequency range:

$$\min_{\Lambda'}\begin{cases}\dfrac{1}{2}\left\|\Re\left(\tilde{K}(\Lambda')\right)-\Re\left(\tilde{K}_{meas}\right)\right\|_2^2=\dfrac{1}{2}\sum_i\left[\Re\left(\tilde{K}(\Lambda',\omega_i)\right)-\Re\left(\tilde{K}_{meas}(\omega_i)\right)\right]^2\\[2mm]\dfrac{1}{2}\left\|\Im\left(\tilde{K}(\Lambda')\right)-\Im\left(\tilde{K}_{meas}\right)\right\|_2^2=\dfrac{1}{2}\sum_i\left[\Im\left(\tilde{K}(\Lambda',\omega_i)\right)-\Im\left(\tilde{K}_{meas}(\omega_i)\right)\right]^2\end{cases}\quad(2.6)$$

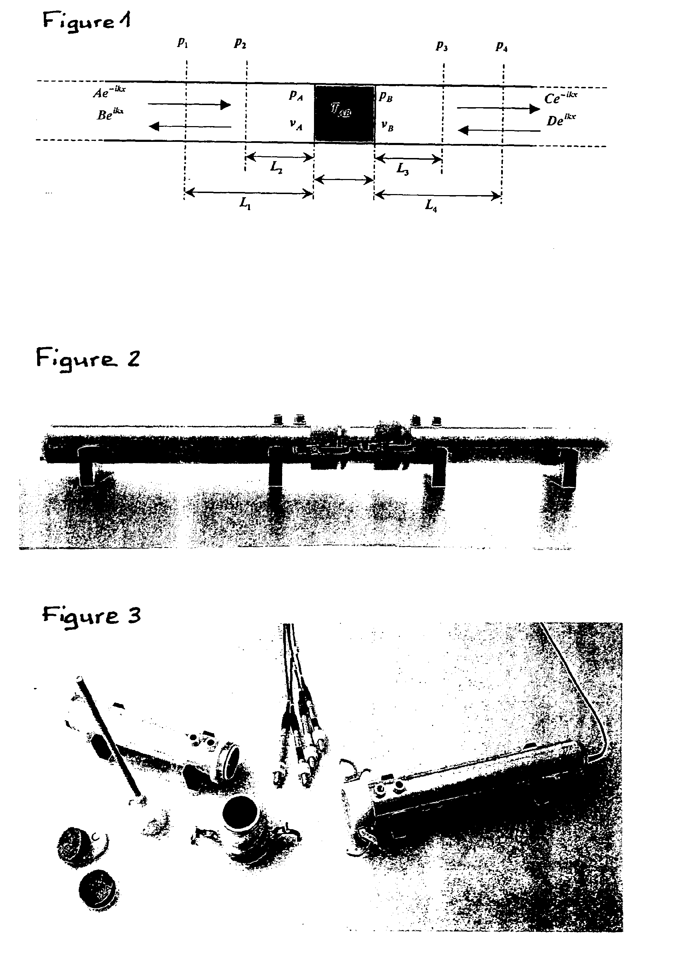

As an example, figure 1 and figure 2 show the result of the curve-fitting procedure applied to the dynamic density and bulk modulus of a 20 mm thick felt material.

It is worth noticing here that this procedure will give as an output just constant values and not frequency functions. As a consequence of this, it is not directly possible to check the "frequency dependence" of the parameters, as it would be if it were possible to apply a direct inversion of equations (2.3) and (2.4). This fact limits somehow the possibility to verify the assumptions of the inversion method directly on the values of the parameters resulting from it. This type of check can be made indirectly afterwards by means of absorption and insulation validation measurements. In this respect, it is also worth mentioning here that, some parameters like $\tau$, $\Lambda$ and $\Lambda'$ can be obtained reliably also at frequencies below the viscous frequency limit $\omega_c$ and that, even when the frequency independence is not fully verified, the parameter values actually oscillate around a mean value. Both these facts seem to indicate that, provided the inversion is not done at unreasonably low frequencies, the parameter values obtained from a best-fit procedure like the one proposed here are likely to coincide with the average values obtained from a direct analytical inversion of the equations.

Present invention will be described in more details by the following and considering the annexed figures:

Fig 1: Two coupled plane wave tubes. In each tube, the pressure is known at two positions: $p_1$ and $p_2$ in the "$A$"-side tube ; $p_3$ and $p_4$ in the "$B$"-side tube.

Fig 2: Porous material analyser. Plane wave tubes configuration with microphones position. From left to right: Excitation tube (45 cm) ; Sample holder (10 cm) ; Receiver tube with anechoic termination (35 cm).

Fig 3: Porous material analyser measurement device kit when dismounted.

Fig 4: Transfer functions measured in the prototype device without sample. The measured TF are compared to the analytical expressions in a plane wave tube; $H_{21} = p_2/p_1$, $H_{31} = p_3/p_1$ and $H_{41} = p_4/p_1$.

Fig 5: Equivalent fluid characteristics for a felt sample 20 mm / 50 kg.m$^{-3}$ The curves are obtained from the transfer functions measured.- With a rigid termination — With an anechoic termination

Fig 6: Parameter identification steps. From transfer functions measurement step to validation.

Fig 7: Normal incidence absorption with rigid backing. Comparison between: - Predicted absorption associated to the measured identified parameters; - Predicted absorption associated to the reference parameters; - Measured absorption in the standard impedance tube.

Tab 1: List of measured porous samples for the parameter identification.

Tab 2: Comparison of the identified parameter results with the reference values.

The calculating tool or methodology used by present invention allows to get the dynamic density $\tilde{\rho}(\omega)$ and the dynamic bulk modulus $\tilde{K}(\omega)$ out of the acoustical measurements. To do this, one considers a flat sample of the porous material of interest and assumes that the equivalent fluid hypotheses can be applied. For a one-dimensional plane wave travelling through the material, the pressure $p_A{}^*$ and $p_B{}^{*1}$, and the velocity $v_A{}^*$ and $v_B{}^{*2}$ on the two respective sides $A$ and $B$ of the sample are linked one to the other by a transfer matrix $T_{AB}$ (3.3):

$$\begin{vmatrix} p_A{}^\bullet \\ v_A{}^\bullet \end{vmatrix} = \begin{bmatrix} \cos k_c L & i Z_c \sin k_c L \\ -\dfrac{\sin k_c L}{i Z_c} & \cos k_c L \end{bmatrix} \cdot \begin{vmatrix} p_B{}^\bullet \\ v_B{}^\bullet \end{vmatrix} \qquad (3.3)$$

[1] The variables $p_A{}^*$ and $p_B{}^*$ are the variables $p_A$ and $p_B$ reduced over $p_1$.

[2] The variables $v_A{}^*$ and $v_B{}^*$ are the variables $v_A$ and $v_B$ reduced over $p_1$. where $L$ is the distance between the two sides $A$ and $B$ of the sample, i.e. the thickness of the sample itself. Starting from the matrix coefficients present in (3.3) it is easily possible to evaluate the impedance of the sample on both sides and, from this, also other quantities like the reflection coefficient, the transmission coefficient and the absorption coefficient (always on both sides). Conversely, if one or more of these quantities can be made available experimentally, it is possible to determine the wave number $kc$ ($(\omega)$) and the characteristic impedance $Zc(\omega)$ and, from these, the equivalent density and bulk modulus using equations (2.2). Different experimental strategies can be used to implement this idea. One use the standard Kundt tube to measure the impedance of the porous sample with two different air-gaps between this and the rigid termination of the tube. On the other hand, one can use the reflected and transmitted pulse signals through the porous sample, as an extension to lower frequencies (~12 kHz) of the ultrasonic approach. The approach proposed here is based on a novel technique that is a natural extension and that allows the evaluation of $kc(\omega)$ and $Zc(\omega)$ with one single measurement.

Let's call *Tube-A* and *Tube-B* two acoustic plane wave tubes coupled through a sample of a porous material for which the equivalent fluid model is applicable. The wave propagation in this porous material is then defined by a transfer matrix like the one in (3.3). As shown in figure 1 and defining the pressures in the Tube-A as $p_1$ and $p_2$, and $p_3$ and $p_4$ in the Tube-B. In each tube, the pressure $p$ can be written as the sum of two unknown forward ($e^{-ikx}$) and backward going ($e^{ikx}$) plane waves. Solving the two plane wave systems in function of the known pressures, leads to the expressions (3.4) for $p_A{}^*$ and $p_B{}^*$ in function of the three acoustical transfer functions $H_{21} = p_2 / p_1$, $H_{31} = p_3 / p_1$ and $H_{41} = p_4 / p_1$.

$$p_A^* = \frac{H_{21} \cdot \sin kL_1 - \sin kL_2}{\sin k(L_1 - L_2)}$$

$$p_B^* = \frac{H_{31} \cdot \sin kL_4 - H_{41} \cdot \sin kL_3}{\sin k(L_4 - L_3)}$$

(3.4)

After this, applying the generalised Euler equation to both plane wave systems leads to the expressions (3.5) for the velocity $v_A^*$ and $v_B^*$:

$$v_A^* = \frac{1}{i\rho c} \cdot \frac{H_{21} \cdot \cos kL_1 - \cos kL_2}{\sin k(L_1 - L_2)}$$

$$v_B^* = \frac{1}{i\rho c} \cdot \frac{H_{31} \cdot \cos kL_4 - H_{41} \cdot \cos kL_3}{\sin k(L_4 - L_3)}$$

(3.5)

Where the lengths $L_1$, $L_2$, $L_3$ and $L_4$ are defined in figure 1, $k = \omega/c$ is the wave number in air and $\rho_0 c$ is the corresponding characteristic impedance.

Knowing $p_A^*$, $p_B^*$, $v_A^*$ and $v_B^*$, using equation (3.3) it is then possible to evaluate the complex quantities $k_c$ and $Z_c$. After some algebraic manipulations, equations (3.6) are obtained.

$$Z_c^2 = \frac{p_B^{*2} - p_A^{*2}}{v_B^{*2} - v_A^{*2}}$$

$$\tan k_c L = \frac{Z_A - Z_B}{\dfrac{Z_A Z_B}{iZ_c} + iZ_c}$$

(3.6)

where $Z_A = p_A^* / v_A^*$ and $Z_B = p_B^* / v_B^*$ are the acoustic impedances on the two sides of the porous sample. Following formulas (3.4) to (3.6) it is possible to get the characteristic quantities $k_c$ and $Z_c$ of the equivalent fluid in function of the three acoustical transfer functions $H_{21}$, $H_{31}$ and $H_{41}$. Then the equations (2.2) can be inverted to calculate $\tilde{\rho}(\omega)$ and $\tilde{K}(\omega)$.

A prototype device was manufactured in order to reproduce the plane wave. It essentially consists of two tubes (A and B) connected through a sample holder where the sample to be characterised is inserted. A loudspeaker is positioned at the rigid end of tube A, while the opposite end of tube B can be in principle equipped either with a rigid termination or with an anechoic termination. The rigid termination is the "easiest" one but some comparative tests showed that the stability and repeatability of the inversion process increased by increasing the absorption at the end of tube B. The anechoic termination was then identified as the one capable of providing the best quality results and for this reason it was used for the validation measurements.

The definition of the tube diameter is very important because it sets the cut-off frequency value of the tube, i.e. the frequency above which the tube can not be considered a plane wave system any more. This point is delicate in view of the assumptions of the inversion methodology: these assumptions "push" the application of the methodology towards the high frequencies and, for this reason, a relatively small-diameter tube would be required. On the other hand, if one wants to use the same device also for low-frequency impedance and absorption measurements, reducing the diameter of the tube can be somehow "dangerous", since it is difficult to get good experimental impedance data at low frequency with a tube having a small diameter. For all these reasons, a compromise has to be found; the first prototype used for the measurements described here was designed for a cut-off frequency of about 3500 Hz, that corresponds to a diameter of ~60 mm.

All the other dimensions and hardware specifications, like tube lengths, microphone spacing and positions, tube wall thickness, loudspeaker power and coating and size of the microphones, are set according to the specifications valid for an impedance tube. Figures 2 and 3 show the prototype device.

The excitation signal was a broadband random noise generated by a standalone device. For the acquisition of the acoustic pressure signals, four microphones were used together with a 4-channels HP supply and analyser. The HP analyser processes the input signals, evaluates the 3 required transfer functions and passes them to a PC connected to it via a USB port. All the subsequent calculations to go from these transfer functions to the parameters are carried out using Matlab scripts. This acquisition set-up was put together just for development purposes: in the final product it is foreseen to have just one PC that will drive the whole acquisition operations and post-processing steps.

The microphones are only calibrated in amplitude. In order to reduce as much as possible the phase mismatch between the two microphones involved in each of the three required transfer functions, it is necessary to proceed with the measurement of a calibration factor $\bar{H}_c$. To get this factor, each transfer function is measured twice ($\bar{H}_I$ and $\bar{H}_{II}$), interchanging the two corresponding microphones. The calibration factor is then obtained as $\bar{H}_c = \sqrt{\bar{H}_I \times \bar{H}_{II}}$. For all the subsequent tests, the measured transfer function $\bar{H}$ is then corrected, dividing it by this calibration factor: $H = \bar{H}/\bar{H}_c$.

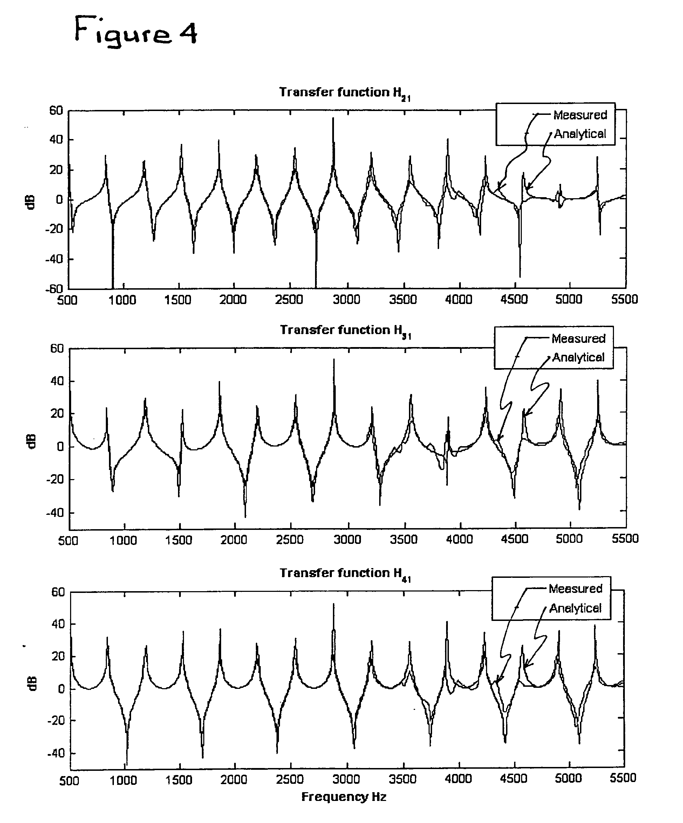

In order to verify the transfer function equations, together with the quality of the manufactured prototype, a first measurement was performed with no sample inside the tube. In this case, a rigid termination was used and the measured transfer functions could be compared with the plane wave analytical model. Figure 4 shows the measured transfer functions $H_{21}=p_2/p_1$, $H_{31}=p_3/p_1$ and $H_{41}=p_4/p_1$ compared to the analytical ones. The correlation is very good until 3500 Hz (the cut-off frequency). At higher frequencies, the oscillations in the measured curves clearly show the presence of transverse modes propagating inside the tube. At lower frequencies, the peaks corresponding to the tube resonances on the measured curves are never as high as the ones calculated by the analytical model, due to some energy dissipation caused by the tube walls that was not taken into account in the analytical model.

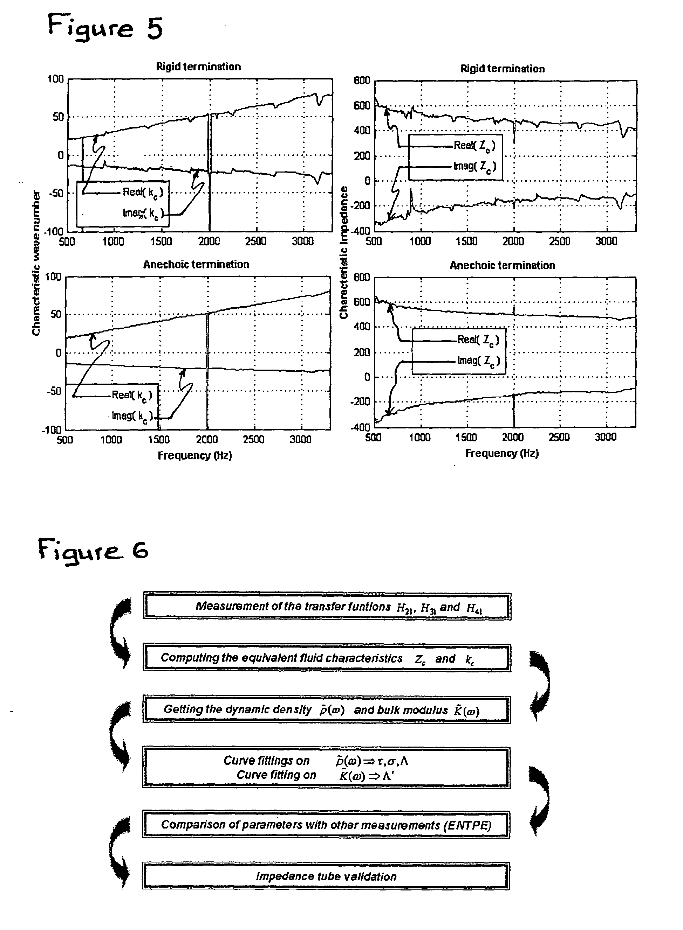

As already mentioned at the beginning, for all the subsequent porous sample measurements, an anechoic termination is used instead of a rigid termination. The corresponding measured transfer functions are smoother, and the calculation of the equivalent fluid characteristics provides more stable results. For instance, figure 5 compares the characteristic wave number and impedance obtained by measuring a 20 mm thick felt material with rigid and anechoic terminations. With an anechoic termination a better quality of the results is obtained.

First validation example

The identified intrinsic parameters are compared with the measured parameters provided by ENTPE (Ecole nationale des travaux publics de l'etat). The identified parameters are also used to compute the absorption of the porous material and validated by comparing the results with standard impedance tube measurements. Figure 6 gives the overview of all the steps performed from the transfer function measurements to the final validation.

A few porous material samples were selected to proceed with the parameter identification. They are listed together with their known properties in table 1. The porosity value was measured with a classical volume/pressure-change apparatus. Most of the samples were measured at frequencies (500-3500 Hz) lower than their estimated viscous frequency limit. This issue will be discussed later, looking at the results. For all the materials, two samples were measured. In principle, at least 3 samples would be necessary to provide standard deviation information together with the mean value.

The processing of the measured transfer functions was carried out, and the final parameter values (*Identified Paramefers*) are given in table 2 together with the values provided by ENTPE *(Reference Parameters)*. The input porosity value and the reference value for the air resistivity were measured directly by ENTPE using classical methods. The other parameters (characteristic lengths and tortuosity) were also obtained by ENTPE, exploiting a validated frequency-dependent identification method based on the measurement of acoustic impedances.

The frequency range for the curve fitting indicated in table 2 corresponds to the linearity limit of the characteristic wave number (for the lower frequency limit) and to the cut-off frequency of the measurement tube (for the upper frequency limit).

As a general trend, one can observe that the air resistivity is always underestimated even though in most cases the difference between the identified value and reference one is acceptable. Concerning the felt materials, the identified value of the viscous length is most of the times very close to the reference one, even though there is also in this case a tendency to underestimate. Very good correlation between the identified and the reference values of the tortuosity is found. This was expected as the curve-fitting performed on the dynamic density data provided a very good agreements. Higher discrepancies are obtained for the thermal characteristic length. This was also expected as the curve-fitting performed on the dynamic bulk modulus data didn't provide perfect agreements. The identification of the characteristic lengths could in principle be improved by measuring the samples at higher frequency but the validation measurements seem to indicate that the final macroscopic acoustic performance results are not very sensitive to these parameters and, as a consequence of this, they are not influenced by uncertainties on them.

The absorption coefficient that is typically used to assess the acoustical performances of porous materials was measured in the standard impedance tube. Despite the possible uncertainties on the identified parameters, it is very important that the absorption coefficient provided by the integration of these is identical to the impedance tube result. The impedance tube measurements were carried out before the identification process, using the same samples with a larger diameter.

The absorption coefficient is calculated according to the curve fitting of the dynamic density $\tilde{\rho}(\omega)$ and bulk modulus $\tilde{K}(\omega)$. The results of the curve fitting ($\tilde{\rho}_{fit}(\omega)$ and $\tilde{K}_{fit}(\omega)$) correspond to the identified parameters. The corresponding equivalent fluid (characteristic wave length $k_{c\_fit}$ and impedance $Z_{c\_fit}$) is calculated using equations (3.2). The predicted normal incidence absorption $a$ associated to the identified parameters and to be compared with the impedance tube absorption is finally given by equation (4.1):

$$\alpha = 1 - \frac{|Z_s - \rho_0 c_0|^2}{|Z_s + \rho_0 c_0|^2} \text{ where } Z_s = -iZ_{c\_fit} \cdot \cot(k_{\_fit}L) \qquad (4.1)$$

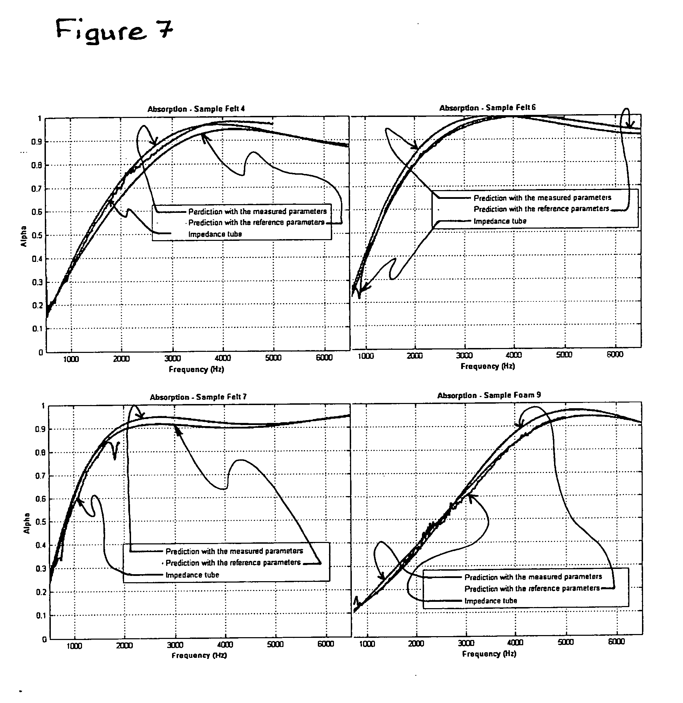

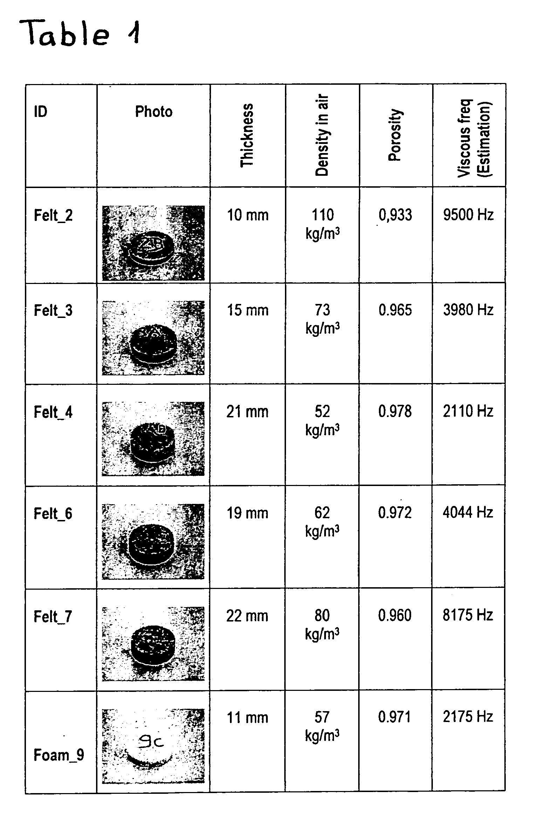

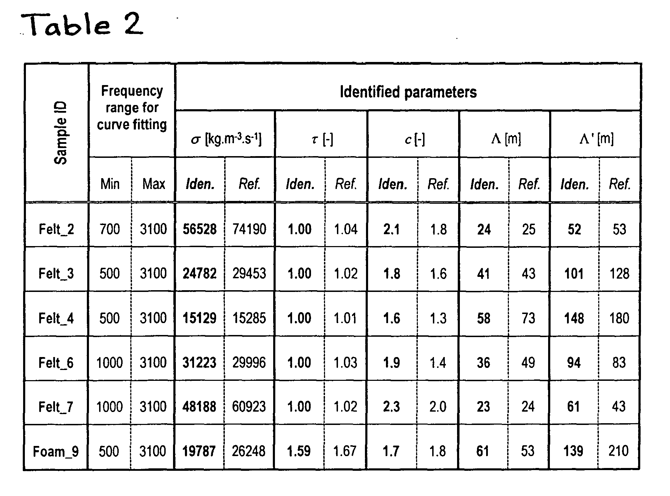

Figure 7 plots the predicted absorption coefficient compared with the standard impedance tube measurements for 4 of the measured samples. The plots are shown over a frequency range larger than the one used for the measurements (until 6500 Hz). The impedance tube data were not accessible at frequencies higher than 5000 Hz using a 30 mm diameter tube. For the sample *Felt_7*, only the 90 mm diameter tube results up to 1900 Hz were available. Generally, the correlation between measured and predicted absorption curves is very good. Nevertheless, it is possible to notice that the predicted absorption associated with the identified parameters tends to slightly overestimate the measured absorption, especially for the felt samples.

**Claims**

1. Device for determining Biot-Allard parameters comprising an apparatus with two acoustic plane wave tubes (A, B) coupled together through a sample holder for holding a porous material, whereby at one end of this apparatus a loudspeaker is installed and at the other end of this apparatus a rigid or anechoic termination is foreseen, each of the tubes (A, B) comprising at least two microphones for measuring the acoustic response of the porous material, which microphones are connected to a calculating tool,
   **characterized in that** the full set of acoustical Biot-Allard parameters, i.e. the porosity ($\phi$), airflow resistivity ($\sigma$), tortuosity ($\tau$), pore shape factor (c), viscous characteristic length (L or $\Lambda$), and the thermal characteristic length (L' or $\Lambda$') are determined by the calculating tool using a single measurement of the acoustic transfer functions ($H_{21}$, $H_{31}$, $H_{41}$) at both sides of the porous material with the above apparatus.

2. Device according to claim 1, **characterised in that** the calculating tool is determining the equivalent fluid characteristics $Z_c$ and $k_c$ in oder to get the dynamic density $\tilde{\rho}(\omega)$ and the dynamic bulk modulus $\tilde{K}(\omega)$ out of the acoustic measurement.

3. Device according to claim 2, **characterized in that** the calculating tool performs curve fittings on the frequency-dependent dynamic density $\tilde{\rho}(\omega)$ to determine the airflow resistivity ($\sigma$), tortuosity ($\tau$) and viscous characteristic length ($\Lambda$).

4. Device according to claim 3, **characterized in that** the calculating tool performs curve fitting on the frequency-dependent dynamic bulk modulus $\tilde{K}(\omega)$ to determine the thermal characteristic length ($\Lambda$').

## Figure 1

$p_1$   $p_2$   $p_3$   $p_4$

$Ae^{-ikx}$

$Be^{ikx}$

$p_A$

$v_A$

$\overline{T}_{AB}$

$p_B$

$v_B$

$Ce^{-ikx}$

$De^{ikx}$

$L_2$

$L_3$

$L_1$

$L_4$

## Figure 2

## Figure 3

Figure 4

# Figure 5

# Figure 6

Measurement of the transfer funtions $H_{21}$, $H_{31}$ and $H_{41}$

Computing the equivalent fluid characteristics $Z_c$ and $k_c$

Getting the dynamic density $\tilde{\rho}(\omega)$ and bulk modulus $\tilde{K}(\omega)$

Curve fittings on $\tilde{\rho}(\omega) \Rightarrow \tau, \sigma, \Lambda$
Curve fitting on $\tilde{K}(\omega) \Rightarrow \Lambda'$

Comparison of parameters with other measurements (ENTPE)

Impedance tube validation

Figure 7

# Table 1

| ID | Photo | Thickness | Density in air | Porosity | Viscous freq (Estimation) |
|---|---|---|---|---|---|
| Felt_2 | | 10 mm | 110 kg/m³ | 0,933 | 9500 Hz |
| Felt_3 | | 15 mm | 73 kg/m³ | 0.965 | 3980 Hz |
| Felt_4 | | 21 mm | 52 kg/m³ | 0.978 | 2110 Hz |
| Felt_6 | | 19 mm | 62 kg/m³ | 0.972 | 4044 Hz |
| Felt_7 | | 22 mm | 80 kg/m³ | 0.960 | 8175 Hz |
| Foam_9 | | 11 mm | 57 kg/m³ | 0.971 | 2175 Hz |

## Table 2

| Sample ID | Frequency range for curve fitting | | Identified parameters | | | | | | | | | |
|---|---|---|---|---|---|---|---|---|---|---|---|---|
| | | | $\sigma$ [kg.m$^{-3}$.s$^{-1}$] | | $\tau$ [-] | | $c$ [-] | | $\Lambda$ [m] | | $\Lambda'$ [m] | |
| | Min | Max | Iden. | Ref. | Iden. | Ref. | Iden. | Ref. | Iden. | Ref. | Iden. | Ref. |
| Felt_2 | 700 | 3100 | 56528 | 74190 | 1.00 | 1.04 | 2.1 | 1.8 | 24 | 25 | 52 | 53 |
| Felt_3 | 500 | 3100 | 24782 | 29453 | 1.00 | 1.02 | 1.8 | 1.6 | 41 | 43 | 101 | 128 |
| Felt_4 | 500 | 3100 | 15129 | 15285 | 1.00 | 1.01 | 1.6 | 1.3 | 58 | 73 | 148 | 180 |
| Felt_6 | 1000 | 3100 | 31223 | 29996 | 1.00 | 1.03 | 1.9 | 1.4 | 36 | 49 | 94 | 83 |
| Felt_7 | 1000 | 3100 | 48188 | 60923 | 1.00 | 1.02 | 2.3 | 2.0 | 23 | 24 | 61 | 43 |
| Foam_9 | 500 | 3100 | 19787 | 26248 | 1.59 | 1.67 | 1.7 | 1.8 | 61 | 53 | 139 | 210 |

**European Patent Office**

## EUROPEAN SEARCH REPORT

Application Number

EP 05 01 2319

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THENAIL D ET AL: "ACTIVE ENHANCEMENT OF THE ABSORBENT PROPERTIES OF A POROUS MATERIAL" SMART MATERIALS AND STRUCTURES, IOP PUBLISHING LTD., BRISTOL, GB, vol. 3, no. 1, 1 March 1994 (1994-03-01), pages 18-25, XP000428651 ISSN: 0964-1726 * figures 10,19 * | 1 | G01N29/11 G01N29/22 |
| A | US 5 377 546 A (ARCAS ET AL) 3 January 1995 (1995-01-03) * column 3, lines 37-50 * | 1 | |
| A | KREUGER J ET AL: "DETERMINATION OF ACOUSTIC ABSORBER PARAMETERS IN IMPEDANCE TUBES" APPLIED ACOUSTICS, ELSEVIER PUBLISHING, GB, vol. 50, no. 1, 1997, pages 79-89, XP001064924 ISSN: 0003-682X * figures 1,2 * | 1 | |
| A | US 4 768 379 A (ARCAS ET AL) 6 September 1988 (1988-09-06) * column 4, lines 14-44; figure 1 * | 1 | TECHNICAL FIELDS SEARCHED (IPC) G01N |
| A,D | WO 2004/088758 A (CENTRE NATIONAL DE LA RECHERCHE SCIENTIFIQUE- CNRS; UNIVERSITE DU MAIN) 14 October 2004 (2004-10-14) * column 3, lines 37-50; figure 1 * | 1 | |

The present search report has been drawn up for all claims

| Place of search | Date of completion of the search | Examiner |
|---|---|---|
| The Hague | 11 November 2005 | Kouzelis, D |

**EP 1 742 048 A1**

## ANNEX TO THE EUROPEAN SEARCH REPORT
## ON EUROPEAN PATENT APPLICATION NO.

EP 05 01 2319

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2005

| Patent document cited in search report | | Publication date | Patent family member(s) | | Publication date |
|---|---|---|---|---|---|
| US 5377546 | A | 03-01-1995 | GB | 2263772 A | 04-08-1993 |
| | | | NL | 9300073 A | 16-08-1993 |
| US 4768379 | A | 06-09-1988 | AR | 245823 A1 | 28-02-1994 |
| | | | AU | 7786887 A | 24-02-1988 |
| | | | BR | 8707401 A | 13-09-1988 |
| | | | CA | 1276282 C | 13-11-1990 |
| | | | EP | 0276283 A1 | 03-08-1988 |
| | | | ES | 2005260 A6 | 01-03-1989 |
| | | | IL | 83312 A | 10-09-1989 |
| | | | JP | 1500456 T | 16-02-1989 |
| | | | WO | 8801056 A1 | 11-02-1988 |
| WO 2004088758 | A | 14-10-2004 | FR | 2853074 A1 | 01-10-2004 |

EPO FORM P0459

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2004088758 A

**Non-patent literature cited in the description**

• **X. OLNY.** An indirect acoustic method for determining intrinsic parameters of porous materials. *2nd Biot Conference on Poromechanics,* 26 August 2002